Europäisches Patentamt

European Patent Office

Office européen des brevets

(19)

(11) EP 0 660 096 B1

(12) EUROPÄISCHE PATENTSCHRIFT

(45) Veröffentlichungstag und Bekanntmachung des Hinweises auf die Patenterteilung:
17.03.1999 Patentblatt 1999/11

(51) Int Cl.$^6$: G01L 21/10

(21) Anmeldenummer: 94120290.5

(22) Anmeldetag: 21.12.1994

(54) **Mikrovakuumsensor**

Microvacuumsensor

Microcapteur de vacuum

(84) Benannte Vertragsstaaten:
DE FR GB IT

(30) Priorität: 23.12.1993 DE 4344256
25.04.1994 DE 4414349

(43) Veröffentlichungstag der Anmeldung:
28.06.1995 Patentblatt 1995/26

(73) Patentinhaber: Heimann Optoelectronics GmbH
D-65199 Wiesbaden (DE)

(72) Erfinder:
• Schieferdecker, Jörg, Dr.
D-65197 Wiesbaden (DE)
• Völklein, Friedemann, Prof.
D-07743 Jena (DE)

(74) Vertreter: Beetz & Partner Patentanwälte
Steinsdorfstrasse 10
80538 München (DE)

(56) Entgegenhaltungen:
US-A- 4 682 503        US-A- 5 347 869

• SENSORS AND ACTUATORS A, Bd. A36, Nr. 1, März 1993 LAUSANNE CH, Seiten 65-71, XP 000368518 F. VÖLKLEIN U.A. 'OPTIMIZATION TOOL FOR THE PERFORMANCE PARAMETERS OF THERMOELECTRIC MICROSENSORS'
• REVIEW OF SCIENTIFIC INSTRUMENTS, Bd. 63, Nr. 3, März 1992 NEW YORK US, Seiten 2026-2029, XP 000295992 A.M. ROBINSON U.A. 'A THERMAL CONDUCTIVITY MICROSTRUCTURAL PRESSURE SENSOR FABRICATED IN STANDARD COMPLEMENTARY METAL-OXIDE SEMICONDUCTOR'
• JOURNAL OF VACUUM SCIENCE AND TECHNOLOGY: PART A, Bd. 7, Nr. 3, Mai 1989 NEW YORK US, Seiten 2393-2396, XP 000045626 C. WANG U.A. 'THERMOCOUPLE GAUGE FOR PARTIAL PRESSURE MEASUREMENTS'
• IEEE JOURNAL OF SOLID-STATE CIRCUITS, Bd. 26, Nr. 12, Dezember 1991 NEW YORK US, Seiten 1998-2007, XP 000272861 C.H. MASTRANGELO U.A. 'MICROFABRICATED THERMAL ABSOLUTE-PRESSURE SENSOR WITH ON-CHIP DIGITAL FRONT-END PROCESSOR'
• JOURNAL OF VACUUM SCIENCE AND TECHNOLOGY: PART A, Bd. 5, Nr. 4, Juli 1987 NEW YORK US, Seiten 2454-2457, A.W. VAN HERWAARDEN U.A. 'DOUBLE-BEAM INTEGRATED THERMAL VACUUM SENSOR'

## Beschreibung

Die vorliegende Erfindung betrifft einen planaren Mikrovakuumsensor nach dem Wärmeleitfähigkeitsprinzip.

Konventionelle Wärmeleitfähigkeits-Vakuummeter beruhen auf der Messung der druckabhängigen Wärmeableitung eines verdünnten Gases mit Hilfe eines im Vakuum aufgespannten elektrisch beheizten Drahtes und sind seit langem als Stand der Technik bekannt. Bekannt sind ferner thermoelektrische Mikrovakuumsensoren mit Dünnschicht-Heizelementen, die mittels mikrotechnologischer Fertigungsverfahren hergestellt werden (z.B. A.W. Herwaarden et al "Small-size vacuum sensors based on silicon thermopiles" in Sensors and Actuators A, 25-27, 1991, 565-569). Bei diesen Vakuumsensoren wird eine freitragende Membran oder ein freischwebender Beam aus einkristallinem Silizium aufgespannt, auf denen die thermoelektrischen Materialien und Heizschichten durch Implantation des Siliziums bzw. Dünnschichtabscheidung erzeugt werden. Ausgenutzt wird das Grundprinzip der Strahlungsthermosäule (Thermopile), bei der die in Dünnschichttechnik hergestellten Leiterbahnen (Thermoschenkel) der beiden unterschiedlichen thermoelektrischen Materialien so in Reihe geschaltet sind, daß abwechselnd Kontakte im zentralen Teil der Membran oder auf dem Beam (sogenannte "heiße" Kontakte) und auf dem Silizium-Grundkörper (sogenannte "kalte" Kontakte) entstehen. Durch Einleitung eines Wärmestromes an den "heißen" Kontakten mittels Heizschicht entsteht eine Temperaturerhöhung dieser "heißen" Kontakte gegenüber den "kalten" Kontakten auf dem als Wärmesenke wirkenden Si-Grundkörper. Die Temperaturdifferenz zwischen den "heißen" und "kalten" Kontakten ist von der Wärmeleitung des den Sensorchip umgebenden Gases abhängig. Mit verringertem Gasdruck nimmt diese Wärmeleitung ab und die thermoelektrische Signalspannung zu.

Ferner bekannt ist ein Mikrovakuumsensor (Ping Kuo Wang, Jin-Shown Shie, "Micro-Pirani vacuum gauge", Rev. Sci. In-str. 65 (2), 1994, 492), bei dem der Hitzdraht als mäanderförmige dünne Schicht aus Platin auf einer dünnen $SiO_2$-Membran angeordnet ist, die an vier Stegen aus dem gleichen $SiO_2$ freischwebend aufgehängt ist. Die Membran, die sich auf einem einkristallinen Silizium-Wafer befindet, wird durch anisotrope Ätzung des Silizium präpariert. Durch den Ätzprozeß entsteht eine pyramidenförmige Ätzgrube unter der Membran, deren Tiefe durch die Dimensionierung der Membran determiniert ist und einige hundert Mikometer beträgt.

Die beschriebenen Vakuumsensoren sind in ihrer Druckempfindlichkeit grundsätzlich durch folgende Effekte begrenzt:

Zu hohen Drücken hin wird die Wärmeableitung durch das umgebende Gas (und damit der Sensor) druckunabhängig, sobald die mittlere freie Weglänge des Gases kleiner als der Abstand der geheizten Oberfläche (z.B. der Hitzdrahtoberfläche, der Membran- oder Beam-Oberfläche) zu den Oberflächen der ungeheizten Umgebung wird. Ein frei im Vakuum positionierter Sensorchip bzw. ein auf einem Sockel befestigter Chip mit typischer Chipdicke von etwa 500 μm verliert seine Druckempfindlichkeit aus dem genannten Grunde bei etwa 10 mbar. Wärmeleitfähigkeitssensoren der beschriebenen Art können deshalb nicht zu exakten Druckmessungen im Grobvakuum zwischen 50 - 1013 mbar eingesetzt werden.

Zu kleinen Drücken hin nimmt die Wärmeableitung durch das umgebende Gas druckproportional ab. Bei konventionellen Hitzdraht-Vakuummetern wird schon bei Drücken um $10^{-3}$ mbar diese Wärmeableitung durch das Gas deutlich kleiner als die (druckunabhängige) Wärmeabgabe des Hitzdrahtes infolge Wärmestrahlung und infolge Wärmeleitung über die Drahtaufhängung. Deshalb sind diese Vakuummeter unterhalb $10^{-3}$ mbar druckunempfindlich. Aus dem Artikel "doublebeam integrated thermal vacuum sensor" von van Herwaarden und P.M. Sarro, (Journal of Vacuum Science and Technology ; Part A ; Band 5, Nr.4, Juli 1987, Seiten 2454 bis 2457) ist ein thermischer Vakuumsensor bekannt, bei dem eine dünne, schlecht wärmeleitende Membran mit einer Heizschicht versehen ist und auf einem Halbleiterkristall aufgespannt ist. Parallel zur Membran ist ein als Wärmesenke dienender Körper vorgesehen.

Aufgabe der Erfindung ist es, einen wirtschaftlich herstellbaren Mikrovakuumsensor nach dem Wärmeleitfähigkeitsprinzip mit erweitertem Empfindlichkeitsbereich von $10^{-5}$ bis $10^3$ mbar mit hoher Meßgenauigkeit anzugeben, der bis zu Temperaturen von 400 °C ausheizbar ist.

Diese Aufgabe wird erfindungsgemäß mit einem Mikrovakuumsensor nach den Ansprüchen 1 oder 2 gelöst. Abhängige Ansprüche sind auf Merkmale bevorzugter Ausführungsformen gerichtet.

Im folgenden wird die Erfindung anhand der Zeichnungen erläutert.

Fig. 1, 2a, 2b und 2c zeigen Ausführungsbeispiele der Erfindung in einer Draufsicht, und

Fig. 3 und 4 je ein Ausführungsbeispiel der Erfindung im Querschnitt.

Die Emfpindlichkeitserweiterung zu kleinen Drücken bis $10^{-5}$ mbar hin wird durch folgende Maßnahmen erreicht:
Erforderlich ist es, daß das Verhältnis $G_{gas}(p)/(G_{St} + G_L)$ des druckabhängigen Wärmeleitwertes infolge Gas-Wärmeleitung $G_{gas}(p)$ und der Summe der Wärmeleitwerte infolge Strahlung $G_{St}$ und Wärmeleitung durch das Hitzdraht-Material $G_L$ möglichst groß wird. Erfindungsgemäß wird diese Aufgabe gelöst, indem der Hitzdraht als dünne Schicht mit möglichst geringem Emissionskoeffizienten auf einer extrem dünnen und schlecht wärmeleitenden Unterlage mit optimierter Geometrie angeordnet wird.

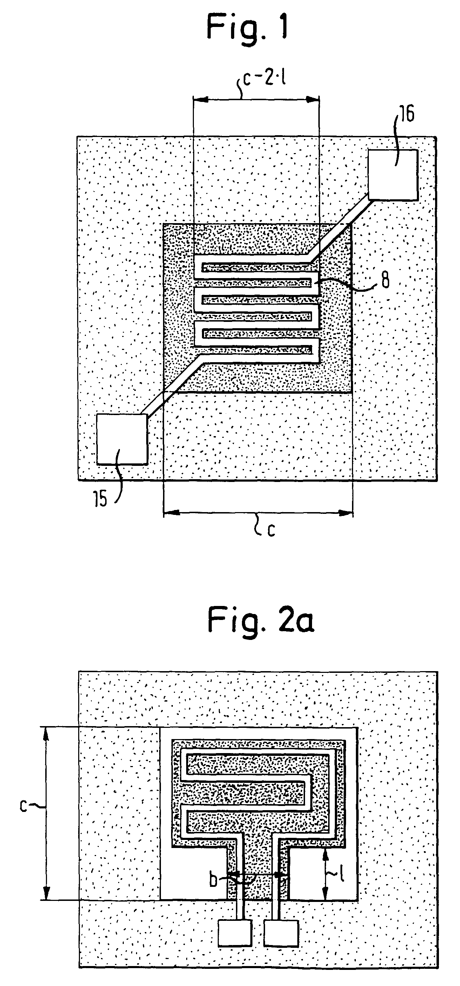

Diese Unterlage besteht in einer ersten Ausführungsform gemäß Fig. 1, vorzugsweise aus einer dünnen quadratischen $SiO_2$- und/oder $Si_3N_4$-Membran der Kantenlänge c, die als geschlossene Membran auf einem einkristallinen Silizium-Wafer angeordnet ist und durch anisotropes Ätzen des Wafers von der Rückseite her präpariert wird. Im zentralen Teil dieser Membran befindet sich eine mäanderförmige Heizschicht, vorzugsweise aus Aluminium, die in ihrer Ausdehnung eine ebenfalls quadratische Fläche der Kantenlänge c-2·l ausfüllt. Die Zuleitungen zu äußeren Bondflächen 15 und 16 sind ebenfalls aus dünnen und sehr schmalen mikrostrukturierten Aluminium-Schichten gebildet, so daß durch den sehr geringen Querschnitt der Zuleitungen der Wärmeleitwert $G_L$ minimiert und nur wenig Wärme zum massiven Silizium-Chip abgeleitet wird.

Die vom Gasdruck abhängige Erwärmung der Heizschicht führt infolge des Temperaturkoeffizienten ihres elektrischen Widerstandes zu einem gasdruckabhängigen Heizschicht-Widerstand. Dieser wird z.B. in einer Wheatstoneschen Brückenschaltung in ein gasdruckabhängiges Spannungssignal gewandelt. Temperaturschwankungen des Sensorchips führen bei diesem Meßprinzip zu unerwünschten Schwankungen der Druckanzeige und damit zu geringer Meßgenauigkeit. Erfindungsgemäß wird die Aufgabe der hohen Meßgenauigkeit dadurch gelöst, daß auf dem Sensorchip im Bereich des massiven Siliziums ein Schichtwiderstand angeordnet ist, der aus der gleichen Aluminium-Schicht wie der Heizschicht-Widerstand mikrotechnologisch geformt wird und somit den gleichen Temperaturkoeffizienten wie die Heizschicht besitzt und deshalb die Kompensation unerwünschter Temperaturschwankungen des Chips gewährleistet.

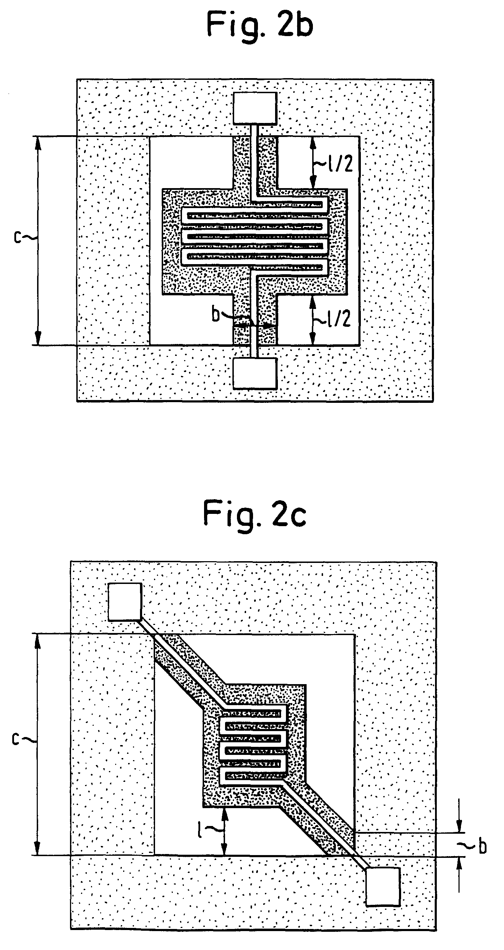

In Fig. 2 ist eine erfindungsgemäße zweite Ausführungsform des Vakuum-Sensorchips in Draufsicht dargestellt. Hier ist die Membran an einem oder mehreren Stegen vorzugsweise des Membranmaterials oder eines Materials mit geringerer Wärmeleitfähigkeit und vorzugsweise der Membrandicke oder geringerer Dicke aufgehängt. In Fig. 2a ist die Aufhängung an einem Steg dargestellt, in Fig. 2b eine Aufhängung an zwei Stegen. Für Sensorstrukturen gemäß Fig. 2a und 2b ist die gesamte Steglänge durch 1, die Stegbreite durch b (b << c) und die Membranfläche durch $(c^2\text{-}l\cdot c)$ gegeben. Für Sensorstrukturen gemäß Fig. 2c ist die Steglänge durch $\sqrt{2}\cdot l$, die Stegbreite durch $\sqrt{2}\cdot b$ (mit b << c) und die Membranfläche durch $(c - 2\cdot l)^2$ gegeben. Da der Wärmeleitwert $G_{gas}(p)$ und der Strahlungsleitwert $G_{St}$ proportional der erwärmten Membranfläche und der Wärmeleitwert $G_L$ umgekehrt proportional der Länge l ist, existiert ein geometrisches Maximum für das Verhältnis $G_{gas}(p) / (G_{St} + G_L)$ und damit für die Druckempfindlichkeit bei kleinen Drücken. Maximale Druckempfindlichkeit ist für Strukturen des Typs Fig. 1 und Fig. 2c durch die Bedingung l = c/6 und für Strukturen des Typs Fig. 2a und 2b durch l = c/2 realisiert.

Die Empfindlichkeitserweiterung bei hohen Drücken bis zu $10^3$ mbar wird erfindungsgemäß dadurch erreicht, daß parallel zur Membran in geringem Abstand von weniger als 5 μm beidseitig je eine nichtgeheizte Wandfläche von mindestens Membrangröße als Wärmesenke realisiert wird, so daß zwischen Membran und Wandflächen ein mit Gas gefüllter Spalt der o. g. Breite entsteht. Erfindungsgemäß werden diese Wandflächen durch anisotropes Ätzen von Silizium-Wafern der gleichen Dicke wie bei der Sensorfertigung hergestellt und z.B. durch anodisches Bonden mit dem Sensorchip und dem Chipsockel verbunden.

In einer anderen Ausführungsform wird mindestens eine Wand aus einem Metallwerkstoff durch Tiefziehen, Prägen, Gießen oder ähnliche Verfahren geformt und anschließend auf den Sensorchip montiert. In einer weiteren Ausführungsform wird die unter der Membran befindliche Wand durch den Siliziumchip selbst gebildet, wobei der Zwischenraum zwischen Membran und Siliziumträger durch Ätzen einer sogenannten Opferschicht freigemacht wird.

Die Wirkung der Erfindung zur Empfindlichkeitserweiterung zu hohen Drücken hin beruht auf folgender Ursache:
Die Wärmeleitung von der geheizten Membran wird u. a. von dem druckabhängigen Wärmeleitwert $G_{gas}(p)$ bestimmt, der sich aus der Wärmeleitfähigkeit des Gases, der Membranfläche und ihrem Abstand zu benachbarten ungeheizten Flächen ergibt. Bei Abständen > 0,5 mm, wie sie für Sensorgehäuse typisch sind, wird dieser Wärmeleitwert schon bei Drücken von etwa 10 mbar druckunabhängig. Bei der erfindungsgemäßen Lösung mit Abständen von < 5 μm bleibt aber die Druckabhängigkeit des Wärmeleitwertes bis zu Drücken von etwa $10^3$ mbar erhalten.

Eine reflektierende Verspiegelung der Wandflächen führt dazu, daß der Strahlungsleitwert $G_{St}$ des Sensors verringert wird. Sie verbessert somit zusätzlich zu den bereits erläuterten Maßnahmen die Druckempfindlichkeit bei kleinen Drücken. Im folgenden werden die erfindungsgemäßen Maßnahmen zur Empfindlichkeitserweiterung bei hohen Drücken anhand von Ausführungsbeispielen unter Bezugnahme auf Zeichnungen näher erläutert.

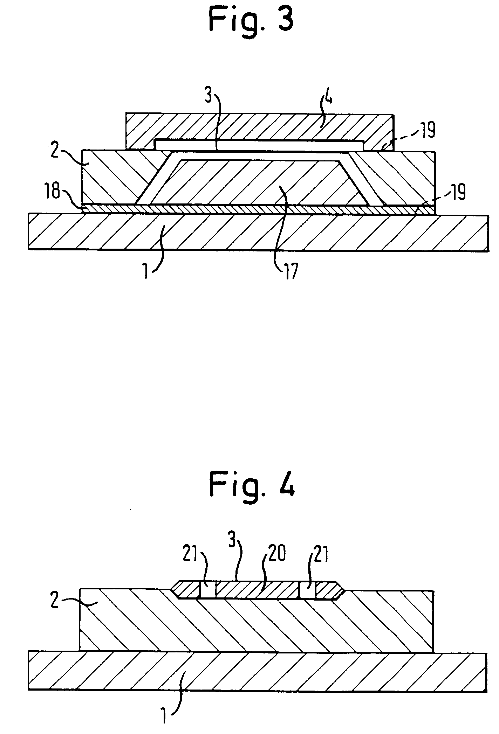

In einer Ausführungsform von Fig. 3 ist auf einem Träger 1 ein durch anisotropes Ätzen geformter Si-Chip 2 montiert. Im zentralen Teil des Chip 2 befindet sich nur eine dünne Membran 3, die üblicherweise aus Siliziumnitrid und/oder Siliziumdioxid besteht, ca. 1 μm dick und von geringer Wärmeleitfähigkeit ist.

Auf der Membran ist in Dünnschichttechnologie (z.B. durch Sputtern) eine Aluminium-Heizschicht und auf dem massiven Silizium eine Kompensationsschicht von einigen hundert nm Dicke strukturiert. Dicht über der Membran 3 befindet sich eine als Wärmesenke wirkende Brücke 4 im Abstand von < 5 μm. Zusätzlich ist unter der Membran ein als Wärmesenke wirkender Körper 17 mit einem Abstand von ebenfalls < 5 μm angeordnet. Die Zwischenräume zwischen der Membran 3 und den Wärmesenken 4 und 17 müssen direkten Zugang zum umgebenden Gas haben.

Der definierte Abstand zwischen Membran 3 und Körper 17 kann z.B. dadurch realisiert werden, daß der durch anisotropes Ätzen geformte Si-Chip 2 mit der Membran 3 auf einem weiteren Si-Chip 17 montiert wird, der ebenfalls durch anisotropes Ätzen geformt ist. Durch die an sich bekannte Nutzung einer zusätzlichen Ätzstoppschicht 18 (z.B. eine epitaktisch aufgewachsene, mit hoher Borkonzentration dotierte Si-Schicht) wird ein Absatz geschaffen, so daß der Abstand zwischen Membran 3 und Wärmesenke 17 festgelegt wird. Außerdem wird durch diesen Absatz eine Montage der beiden Chips 2 und 17 im Waferverband möglich. Diese Montage im Waferverband kann z.B. durch anodisches Bonden erfolgen.

Der definierte Abstand zwischen Membran und Brücke 4 wird realisiert, indem diese Brücke entweder durch einen strukturgeätzten Si-Chip gebildet wird, der durch anodisches Bonden im Waferverband montiert wird, oder in Einzelmontage werden metallische Tiefzieh- bzw. Preß-, Präge-, oder Gußteile auf den Chip 2 aufgeklebt. Durch hier verdeckt dargestellte Lüftungskanäle 19 wird für einen ungehinderten Gaszutritt zu den Zwischenräumen unter und über der Membran gesorgt.

In Fig. 4 ist eine weitere Ausführungsform gezeigt, bei der die untere Wärmesenke im die Membran tragenden Chip 2 erzeugt wird:
Ausgangspunkt ist die an sich bekannte Opferschichttechnologie, bei der auf dem Chip 2 eine Opferschicht 20 (z.B. Siliziumdioxid) erzeugt wird, auf der die dünne Membran 3 abgeschieden ist. Die Membran wird an mehreren Stellen unterbrochen, so daß Kanäle 21 zur Opferschicht ausgebildet werden. Durch einen Ätzmittelangriff, der die Opferschicht selektiv gegen die Membran ätzt, entsteht unter der Membran ein Hohlraum, der durch die Kanäle 21 mit der umgebenden Atmosphäre verbunden ist. Auf diese Weise kann der Abstand zwischen Membran und Wärmesenke (in diesem Fall das darunterliegende Si-Substrat 2) sehr gering (z.B. nur wenige μm dick) und reproduzierbar eingestellt werden.

Die Ausheizbarkeit des Mikrovakuumsensors bis zu Temperaturen von 400 °C wird erfindungsgemäß durch die verwendeten IC-kompatiblen Materialien Silizium, Aluminium, Siliziumnitrid bzw. Siliziumdioxid bewirkt, die eine Temperaturbeständigkeit weit über 400 °C haben.

**Patentansprüche**

1. Mikrovakuumsensor mit erweitertem Empfindlichkeitsbereich mit:

   - einer dünnen, schlecht wärmeleitenden Membran (3), die in einem rechtwinkligen Membranbereich auf einem einkristallinen Siliziumchip (2) frei aufgespannt ist, wobei der Membranbereich des Siliziumchips durch ein erstes Paar paralleler Kanten und ein dazu rechtwinklig verlaufendes zweites Paar paralleler Kanten begrenzt ist, wobei im Bereich der Kanten des ersten Paars Bondflächen (15, 16) vorgesehen sind, und wobei die Membranfläche an einem oder mehreren Stegen des Membranmaterials oder eines Materials geringerer Wärmeleitfähigkeit und vorzugsweise der Membrandicke oder geringerer Dicke aufgehängt ist;

   - einer dünnen metallischen Heizschicht (8), vorzugsweise aus Aluminium, die auf der Membran (3) angeordnet ist, wobei die Zuleitungen des Heizers (8) über die Stegverbindung von einer oder zwei gegenüberliegenden Seitenmitten entlang einer Mittellinie des Sensors zu Bondflächen (15, 16) auf dem Siliziumchip (2) angeordnet sind; und

   - mehrere parallel zur Oberfläche der Membran (3) angeordneten Körpern (4, 17), die als Wärmesenke gegenüber der Membran (3) wirken, wobei zwischen der Membran (3) und den Wandflächen der Körper (4, 17) Gas aus der Umgebung des Sensors frei zirkulieren kann;

   dadurch gekennzeichnet, daß

   die Bedingung 1 = c/2 realisiert ist, wobei c die Länge der Kanten des zweiten Paars ist und 1 im wesentlichen die Differenzlänge zwischen c und der Heizerseitenlänge in Richtung von c ist; daß die Heizschicht (8) im nahen IR-Bereich ein sehr geringes Emissionsvermögen von weniger als 0,1 besitzt; daß auf dem Siliziumchip (2) im Bereich des massiven Siliziums ein Schichtwiderstand mit dem gleichen Temperaturkoeffizienten wie die metallische Heizschicht (8) zur Kompensation von Temperaturschwankungen angeordnet ist; und daß die Wandflächen der Körper (4, 17) eben und verspiegelt sind und in einem Abstand von weniger als 5 μm zur Membran (3) angeordnet sind.

2. Mikrovakuumsensor mit erweitertem Empfindlichkeitsbereich mit:

   - einer dünnen, schlecht wärmeleitenden Membran (3), die in einem quadratischen Membranbereich auf einem einkristallinen Siliziumchip (2) frei aufgespannt ist, wobei die Membranfläche allseitig augliegend oder an mehreren Stegen des Membranmaterials oder eines Materials geringerer Wärmeleitfähigkeit und vorzugsweise der Membrandicke oder geringerer Dicke aufgehängt ist;

- einer dünnen metallischen Heizschicht, (8), vorzugsweise aus Aluminium, die auf der Membran (3) angeordnet ist; und

- mehrere parallel zur Oberfläche der Membran (3) angeordneten Körpern (4, 17), die als Wärmesenke gegenüber der Membran (3) wirken, wobei zwischen der Membran (3) und den Wandflächen der Körper (4, 17) Gas aus der Umgebung des Sensors frei zirkulieren kann;

dadurch gekennzeichnet, daß die Zuleitungen des Heizers in einer Diagonalen des Membranbereichs liegen;

daß die Bedingung l = c/6 realisiert ist, wobei c die Seitenlänge des Membranbereichs und l im wesentlichen die halbe Differenzlänge zwischen c und der Heizerseitenlänge in Richtung von c ist;

daß die Heizschicht (8) im nahen IR-Bereich ein sehr geringes Emissionsvermögen von weniger als 0,1 besitzt;

daß auf dem Siliziumchip (2) im Bereich des massiven Siliziums ein Schichtwiderstand mit dem gleichen Temperaturkoeffizienten wie die metallische Heizschicht (8) zur Kompensation von Temperaturschwankungen angeordnet ist; und

daß die Wandflächen der Körper (4, 17) eben und verspiegelt sind und in einem Abstand von weniger als 5 µm zur Membran (3) angeordnet sind.

3. Mikrovakuumsensor nach Anspruch 1 oder 2, gekennzeichnet dadurch, daß die Wandflächen durch anisotropes Ätzen von Silizium-Wafern der gleichen Dicke wie bei der Chipfertigung hergestellt und z.B. durch anodisches Bonden mit dem Wafer des Sensorchips verbunden sind.

4. Mikrovakuumsensor nach Anspruch 1 oder 2, gekennzeichnet dadurch, daß mindestens eine der Wandflächen (4, 17) aus einem Metallwerkstoff durch Tiefziehen, Prägen, Gießen oder ähnliche Verfahren geformt und anschließend auf den Sensorchip montiert ist.

5. Mikrovakuumsensor nach Anspruch 1 oder 2, gekennzeichnet dadurch, daß eine der Wandflächen (4, 17) im Sensorchip selbst ausgebildet ist, wobei der Zwischenraum zwischen Chipmembran und Wandfläche durch eine Opferschicht (20) gebildet ist, die selektiv gegen die Membran durch Ätzen entfernt ist, wobei der Zwischenraum durch Lüftungskanäle (21) in der Membran (3) mit der äußeren Atmosphäre verbunden ist.

6. Mikrovakuumsensor nach Anspruch 1 oder 2, gekennzeichnet dadurch, daß durch Verwendung von IC-kompatiblen Materialien wie Silizium, Aluminium, Siliziumnitrid bzw. Siliziumdioxid eine Ausheizbarkeit des Sensors bis zu Temperaturen von 400 °C realisiert ist.

**Claims**

1. A small-size vacuum sensor having an extended sensitivity range, comprising:

- a thin membrane (3), which is a poor thermal conductor and which in a rectangular zone thereof is clamped freely on a monocrystalline silicon chip (2), the membrane zone of the silicon chip being defined by a first pair of parallel edges and a second pair of parallel edges extending at right angles thereto, bond surfaces (15, 16) being provided in the zone of the edges of the first pair, and the membrane surface being suspended from one or more webs of the membrane material or of a material of a lesser thermal conductivity and preferably of the membrane thickness or a lesser thickness;

- a thin metal heating film (8), preferably of aluminium, which is disposed on the membrane (3), the leads to the heater (8) being disposed above the web connection of one or two opposite side centres along a centre-line of the sensor to bond surfaces (15, 16) on the silicon chip (2); and

- a plurality of members (4, 17) disposed parallel to the surface of the membrane (3) and acting as a heat sink relative to the membrane (3), gas being able to circulate freely from the surroundings of the sensor between the membrane (3) and the wall surfaces of the members (4, 17);

characterised in that

the condition l = c/2 is embodied where c is the length of the edges of the second pair and 1 is substantially the differential length between c and the heater side length in the direction of c;

in that the heating film (8) has in the near IR range a very low emissivity of less than 0.1;

in that a film resistor having the same temperature coefficient as the metal heating film (8) is disposed on the silicon chip (2) in the region of the solid silicon for the purpose of compensating for temperature fluctuations; and

in that the wall surfaces of the members (4, 17) are flat and mirror-coated and are disposed at a distance of less than 5 μm from the membrane (3).

2. A small-size vacuum sensor having an extended sensitivity range, comprising:

- a thin membrane (3), which is a poor thermal conductor and which in a rectangular zone thereof is clamped freely on a monocrystalline silicon chip (2), the membrane surface being suspended so as to bear in contact throughout or from a plurality of webs of the membrane material or of a material of a lesser thermal conductivity and preferably of the membrane thickness or a lesser thickness;

- a thin metal heating film (8), preferably of aluminium, which is disposed on the membrane (3), and

- a plurality of members (4, 17) disposed parallel to the surface of the membrane (3) and acting as a heat sink relative to the membrane (3), gas being able to circulate freely from the surroundings of the sensor between the membrane (3) and the wall surfaces of the members (4, 17);

characterised in that

the leads to the heater are disposed on a diagonal of the membrane zone;

in that the condition l = c/6 is embodied where c is the side length of the membrane zone and 1 is substantially half the differential length between c and the heater side length in the direction of c;

in that the heating film (8) has in the near IR range a very low emissivity of less than 0.1;

in that a film resistor having the same temperature coefficient as the metal heating film (8) is disposed on the silicon chip (2) in the region of the solid silicon for the purpose of compensating for temperature fluctuations; and

in that the wall surfaces of the members (4, 17) are flat and mirror-coated and are disposed at a distance of less than 5 μm from the membrane (3).

3. A small-size vacuum sensor according to claim 1 or 2, characterised in that the wall surfaces are made by anisotropic etching of silicon wafers of the same thickness as in the chip production and are connected to the wafer of the sensor chip, for example, by anodic bonding.

4. A small-size vacuum sensor according to claim 1 or 2, characterised in that at least one of the wall surfaces (4, 17) is formed from a metal material by deep-drawing, stamping, casting or similar processes and is then mounted on the sensor chip.

5. A small-size vacuum according to claim 1 or 2, characterised in that one of the wall surfaces (4, 17) is formed in the sensor chip itself, the gap between the chip membrane and the wall surface being formed by a sacrifice chip (20), which is selectively removed relative to the membrane by etching, the gap communicating with the external atmosphere by venting ducts (21) in the membrane (3).

6. A small-size vacuum according to claim 1 or 2, characterised in that bakeability of the sensor up to temperatures of 400°C is achieved by the use of IC-compatible materials such as silicon, aluminium, silicon nitride or silicon dioxide.

**Revendications**

1. Microcapteur à vide avec plage de sensibilité étendue, comprenant :

- une fine membrane d'une mauvaise conductivité thermique (3) qui est fixée librement dans une zone de membrane rectangulaire sur une pastille en silicium monocristallin (2), la zone de membrane de la pastille en silicium étant limitée par une première paire de bords parallèles et une deuxième paire de bords parallèles s'étendant perpendiculairement à celle-ci, des surfaces de liaison (15, 16) étant prévues dans la zone des bords de la première paire, et la surface de membrane étant suspendue sur une ou plusieurs barrettes du matériau de membrane ou d'un matériau de conductibilité thermique inférieure et de préférence de l'épaisseur de la membrane ou d'une épaisseur inférieure ;
- une fine couche chauffante métallique (8), de préférence en aluminium, qui est disposée sur la membrane (3), les conducteurs d'amenée de l'élément chauffant (8) étant disposés en surfaces de liaison (15, 16) à travers la connexion des barrettes provenant d'une ou de deux centres latéraux opposés suivant une ligne médiane du capteur sur la pastille en silicium (2) ; et
- plusieurs corps (4, 17) disposés parallèlement à la surface de la membrane (3), qui servent de dissipateur thermique par rapport à la membrane (3), un gaz provenant de l'entourage du capteur pouvant circuler librement entre la membrane (3) et les surfaces de paroi des corps (4, 17) ;

caractérisé en ce que

la condition 1 = c/2 est réalisée, c étant la longueur des bords de la deuxième paire et 1 étant essentiellement la longueur différentielle entre c et la longueur des côtés de l'élément chauffant dans la direction de c ;
en ce que la couche chauffante (8) possède une capacité d'émission très faible dans la plage IR proche de moins de 0,1 ;
en ce que sur la pastille en silicium (2) dans la zone du silicium massif, une résistance à couche avec le même coefficient de température que la couche chauffante métallique (8) est disposée pour compenser des variations de température ; et
en ce que les surfaces de paroi des corps (4, 17) sont planes et métallisées et sont disposées à un espacement inférieur à 5 μm par rapport à la membrane (3).

2. Microcapteur à vide avec plage de sensibilité étendue, comprenant :

- une fine membrane d'une mauvaise conductivité thermique (3) qui est fixée librement dans une zone de membrane carrée sur une pastille en silicium monocristallin (2), la zone de membrane étant supportée par tous les côtés ou suspendue sur plusieurs barrettes du matériau de membrane ou d'un matériau de conductibilité thermique inférieure et de préférence de l'épaisseur de la membrane ou d'une épaisseur inférieure ;
- une fine couche chauffante métallique (8), de préférence en aluminium, qui est disposée sur la membrane (3) ; et
- plusieurs corps (4, 17) disposés parallèlement à la surface de la membrane (3), qui servent de dissipateur thermique par rapport à la membrane (3), un gaz provenant de l'entourage du capteur pouvant circuler librement entre la membrane (3) et les surfaces de paroi des corps (4, 17) ;

caractérisé en ce que les conducteurs d'amenée de l'élément chauffant se trouvent sur une diagonale de la zone de membrane ;

en ce que la condition 1 = c/6 est réalisée, c étant la longueur latérale de la zone de membrane et 1 étant essentiellement la moitié de la longueur différentielle entre c et la longueur latérale de l'élément chauffant dans la direction de c ;

en ce que la couche chauffante (8) possède une capacité d'émission très faible dans la plage IR proche de moins de 0,1 ;
en ce que sur la pastille en silicium (2) dans la zone du silicium massif, une résistance à couche avec le même coefficient de température que la couche chauffante métallique (8) est disposée pour compenser des variations de température ; et
en ce que les surfaces de paroi des corps (4, 17) sont planes et métallisées et sont disposées à un espacement inférieur à 5 μm par rapport à la membrane (3).

3. Microcapteur à vide selon la revendication 1 ou 2, caractérisé en ce que les surfaces de paroi sont fabriquées par attaque anisotrope de plaquettes de silicium de la même épaisseur que lors de la production des pastilles et sont reliées avec la plaquette de la pastille de capteur par exemple par liaison anodique.

4. Microcapteur à vide selon la revendication 1 ou 2, caractérisé en ce qu'au moins l'une des surfaces de paroi (4, 17) est formée à partir d'un matériau métallique par emboutissage, matriçage, moulage ou des procédés similaires, et est ensuite montée sur la pastille de capteur.

5. Microcapteur à vide selon la revendication 1 ou 2, caractérisé en ce qu'une des surfaces de paroi (4, 17) est réalisée dans la pastille de capteur proprement dite, l'interstice entre la membrane de pastille et la surface de paroi étant formé par une couche sacrifiée (20) qui est éliminée par attaque sélectivement par rapport à la membrane, l'interstice étant relié à l'atmosphère extérieure par des canaux d'aération (21) dans la membrane (3).

6. Microcapteur à vide selon la revendication 1 ou 2, caractérisé en ce que l'utilisation de matériaux compatibles CI, comme le silicium, l'aluminium, le nitrure de silicium ou le dioxyde de silicium réalise une étuvabilité du capteur jusqu'à des températures de 400°C.

# Fig. 1

# Fig. 2a

# Fig. 2b

# Fig. 2c

# Fig. 3

# Fig. 4